# EUROPÄISCHE PATENTANMELDUNG

(11) **EP 1 775 062 A2**
(43) Veröffentlichungstag der Anmeldung: **18.04.2007**
(21) Anmeldenummer: 06020718.0
(22) Anmeldetag: 02.10.2006
(51) Int. Cl.: B23P 11/00, B60R 21/20

(54) **Verfahren zum Befestigen eines Gasgenerators in einer Gasgeneratorkammer und Gehäuse mit einer Gasgeneratorkammer**

(30) Priorität: 14.10.2005 DE 102005049156
(71) Anmelder: GM Global Technology Operations, Inc., Detroit, MI 48265-3000 (US)
(72) Erfinder: Bonarens, Frank, 61440 Oberursel (DE)
(74) Vertreter: Strauss, Peter

(57) **Zusammenfassung**

Die vorliegende Erfindung betrifft ein Verfahren zum Befestigen eines Gasgenerators (2) in einer Gasgeneratorkammer (12) mit den Verfahrensschritten Bereitstellen eines Gasgenerators (2) und einer Gasgeneratorkammer (12), wobei der Gasgenerator (2) in die Gasgeneratorkammer (12) einpressbar ist, Einpressen des Gasgenerators (2) in die Gasgeneratorkammer (12), und Erfassen des Einpressdrucks oder der Einpresskraft während des Einpressens. Die vorliegende Erfindung betrifft ferner ein Gehäuse (10) mit einer Gasgeneratorkammer (12), das vorteilhaft in dem erfindungsgemäßen Verfahren verwendet werden kann.

## Beschreibung

Die vorliegende Erfindung betrifft ein Verfahren und eine Vorrichtung zum Befestigen eines Gasgenerators für eine Airbageinrichtung in einer Gasgeneratorkammer mit den Verfahrensschritten des Bereitstellens eines Gasgenerators und einer Gasgeneratorkammer, des Einpressens des Gasgenerators in die Gasgeneratorkammer und des Erfassens des Einpressdrucks oder der Einpresskraft während des Einpressens.

Aus dem Stand der Technik sind unterschiedliche Verfahren zum Anbringen eines Gasgenerators innerhalb einer Gasgeneratorkammer bekannt, die beispielsweise in einem Airbaggehäuse vorgesehen ist. So kommen insbesondere Verfahren zum Einsatz, bei denen die Gasgeneratoren in die Gasgeneratorkammer eingeführt werden, wobei die Gasgeneratorkammer und der Gasgenerator derart dimensioniert sind, dass es durch das Einführen zu einem Einpressen des Gasgenerators in der Gasgeneratorkammer kommt. Hierzu ist es insbesondere erforderlich, dass die Dimensionen des Gasgenerators und der Gasgeneratorkammer exakt aufeinander abgestimmt sind. Ist der Freiraum innerhalb der Gasgeneratorkammer im Verhältnis zu dem einzupressenden Gasgenerator beispielsweise zu klein dimensioniert, so würde dies zu erhöhten Fügespannungen innerhalb des Gehäuses, das die Gasgeneratorkammer umschließt, führen. Übersteigen diese Fügespannungen einen Grenzwert, so kann dies zum Versagen des Gehäuses führen.

Um ein Versagen des Bauteiles zu verhindern, wurden zunächst stichprobenartige Prüfungen an dem bereits fertig gestellten Verbund aus Gasgenerator und Gehäuse durchgeführt. Diese Prüfungen umfassten beispielsweise die Zündung des Airbags im Rahmen eines Deploymenttests. Auf diese Weise konnte jedoch nicht ausgeschlossen werden, dass diejenigen Baugruppen, die keiner Prüfung unterzogen wurden, tatsächlich sicher waren.

Aus diesem Grunde ist man dazu übergegangen, die Funktionsfähigkeit des Bauteiles bereits während des Einpressens des Gasgenerators in die Gasgeneratorkammer zu überprüfen. So werden bei den bekannten Verfahren hydraulische oder pneumatische Stempel verwendet, die den Gasgenerator in die Gasgeneratorkammer einpressen. Sind der Gasgenerator und die Gasgeneratorkammer fehlerhaft dimensioniert, was letztlich zu erhöhten Fügespannungen innerhalb des Gehäuses führen würde, so verhindern Druck- bzw. Kraftbegrenzer, dass die Stempel den Gasgenerator dennoch mit entsprechend erhöhtem Druck oder erhöhter Kraft einpressen. Der Prozess wird vielmehr gestoppt.

Um das Stoppen des Prozesses zu verhindern, muss bei dem bekannten Verfahren auf eine genaue Einhaltung der Toleranzen auf Seiten des Gasgenerators und der Gasgeneratorkammer geachtet werden, was letztlich jedoch mit einem erhöhten Aufwand bei der Fertigung der einzelnen Bauteile verbunden ist. Bei dem vorstehend genannten Verfahren hat es sich ferner gezeigt, dass durch die Festlegung eines oberen Druck- oder Kraftgrenzwertes auch eine Vielzahl von Bauteilen, bei denen die Funktionsfähigkeit tatsächlich gewährleistet war, als fehlerhaft eingestuft wurden. Dies führte häufig zu unberechtigten Abbrüchen des Verfahrens, wodurch letztlich der effektive Ablauf des Herstellungsprozesses gefährdet ist.

Es ist daher eine Aufgabe der vorliegenden Erfindung, ein Verfahren zum Befestigen eines Gasgenerators in einer Gasgeneratorkammer mit dem Verfahrensschritt des Einpressens des Gasgenerators in die Gasgeneratorkammer anzugeben, das sicher und effektiv durchführbar ist und bei dem eine sichere Unterscheidung zwischen funktionsuntüchtigen und funktionstüchtigen Baugruppen möglich ist. Der Erfindung liegt ferner die Aufgabe zu Grunde, ein Gehäuse mit einer Gasgeneratorkammer zu schaffen, das vorteilhaft in dem erfindungsgemäßen Verfahren einsetzbar ist.

Diese Aufgabe wird durch die in den Patentansprüchen 1 bzw. 14 angegebenen Merkmale gelöst. Vorteilhafte Ausführungsformen der Erfindung sind Gegenstand der Unteransprüche.

Das erfindungsgemäße Verfahren zum Befestigen eines Gasgenerators in einer Gasgeneratorkammer umfasst die nachstehenden Verfahrensschritte. Zunächst werden ein Gasgenerator und eine Gasgeneratorkammer bereitgestellt, wobei der Gasgenerator in die Gasgeneratorkammer eingepresst werden kann. Die Gasgeneratorkammer kann beispielsweise innerhalb eines Airbaggehäuses ausgebildet sein. Die Gasgeneratorkammer kann ferner zum Beispiel als lang gestreckter Raum ausgebildet sein, der stirnseitig eine Öffnung aufweist, durch die der Gasgenerator eingeführt werden kann. Um ein Einpressen durch das Einführen zu ermöglichen, sind beispielsweise der Außendurchmesser des Gasgenerators und der Innendurchmesser der Gasgeneratorkammer derart ausgebildet, dass durch das Einführen eine Presspassung entsteht. Der Innendurchmesser der Gasgeneratorkammer könnte auch durch entsprechende Stützrippen verkleinert sein. Anschließend beginnt das Einpressen des Gasgenerators in die Gasgeneratorkammer. Während einer ersten Einpressphase wird der aufgebrachte Einpressdruck oder die aufgebrachte Einpresskraft erfasst, um anschließend den aufgebrachten Einpressdruck oder die aufgebrachte Einpresskraft in einer darauf folgenden Einpressphase zu erfassen. Unter einer Einpressphase ist eine Phase zu verstehen, in der tatsächlich schon Einpressdruck oder -kraft aufgebracht wird. Bei der darauf folgenden Einpressphase muss es sich nicht um die unmittelbar auf die erste Einpressphase folgende Phase handeln. Als Anfang oder Ende der jeweiligen Einpressphasen kann beispielsweise ein vorgegebener Einpresswegpunkt des Gasgenerators oder ein vorgegebener Einpresszeitpunkt gewählt werden. Das Verfahren wird unterbrochen, wenn ein vorbestimmter Grenzwert überschritten wird. Bei diesem Grenzwert kann es sich beispielsweise um einen vorgegebenen maximalen oder minimalen Einpressdruck/-kraft handeln, wie dies unter Bezugnahme auf eine besondere Ausführungsform beschrieben wird.

Das erfindungsgemäße Verfahren hat den Vorteil, dass im Gegensatz zum Stand der Technik eine wesentlich genauere Unterscheidung zwischen funktionstüchtigen und funktionsuntüchtigen Bauteilen möglich ist, was zur Folge hat, dass das Verfahren nur dann unterbrochen wird, wenn tatsächlich ein fehlerhaftes Bauteil mit zu hohen Fügespannungen produziert wurde. Des Weiteren eignet sich das erfindungsgemäße Verfahren insbesondere für Gasgeneratorkammern, in denen die Einpressbereiche an unterschiedlich stark belastbaren Stellen vorgesehen sind, wie dies später eingehender erläutert werden soll.

In einer bevorzugten Ausführungsform des erfindungsgemäßen Verfahrens sind die weiteren Verfahrensschritte des Festlegens einer oberen Grenzwertkurve und einer unteren Grenzwertkurve für die erste und die darauf folgende Einpressphase und des Erfassens des Einpressdruck- oder -kraftverlaufes vorgesehen, wobei das Verfahren unterbrochen wird, wenn der Einpressdruck- oder -kraftverlauf die untere Grenzwertkurve unterschreitet oder die obere Grenzwertkurve überschreitet. Hierdurch ist es möglich, den Prozess bereits zu einem Zeitpunkt zu unterbrechen, zu dem absehbar ist, dass ein nichtfunktionstüchtiges Bauteil erzeugt werden wird. Die entsprechenden Grenzwertkurven können an Hand von Vorversuchen ermittelt werden.

In einer besonders bevorzugten Ausführungsform des erfindungsgemäßen Verfahrens wird die Differenz zwischen dem Einpressdruck oder der Einpresskraft am Ende einer ersten Einpressphase und dem Einpressdruck oder der Einpresskraft am Ende einer darauf folgenden Einpressphase berechnet. Anschließend wird die ermittelte Differenz mit einem Grenzwert verglichen. Sollte die Differenz den vorbestimmten Grenzwert überschreiten, so wird das Verfahren unterbrochen.

Die erfindungsgemäßen Vorteile können besonders gut verwirklicht werden, indem die Merkmale beider vorgenannten besonderen Ausführungsformen in dem Verfahren verwirklicht sind, da hierdurch eine noch genauere Überwachung des herzustellenden Bauteils möglich ist.

In einer weiteren vorteilhaften Ausführungsform des erfindungsgemäßen Verfahrens wird beim Unterbrechen des Verfahrens ferner ein Warnsignal ausgegeben. Dieses Warnsignal kann beispielsweise visuell, taktil oder akustisch durch die Bedienungsperson wahrgenommen werden, so dass diese auf die Unterbrechung des Verfahrens hingewiesen wird.

In einer bevorzugten Ausführungsform des erfindungsgemäßen Verfahrens weist die zur Verfügung gestellte Gasgeneratorkammer mindestens einen ersten und einen zweiten Einpressbereich auf, wobei der Gasgenerator im Verlaufe des Einpressens zunächst nur in den ersten Einpressbereich und anschließend zusätzlich in den zweiten Einpressbereich der Gasgeneratorkammer eingepresst wird.

In einer weiteren bevorzugten Ausführungsform des erfindungsgemäßen Verfahrens endet die erste Einpressphase unmittelbar vor dem zusätzlichen Einpressen des Gasgenerators in den zweiten Einpressbereich.

In einer weiteren vorteilhaften Ausführungsform des erfindungsgemäßen Verfahrens endet die darauf folgende Einpressphase nach dem Einpressen des Gasgenerators in den zweiten Einpressbereich.

In einer weiteren bevorzugten Ausführungsform des erfindungsgemäßen Verfahrens kann der zur Verfügung gestellte Gasgenerator mit einem Gehäuse verrastet werden, in dem die Gasgeneratorkammer ausgebildet ist, nachdem die darauf folgende Einpressphase beendet ist.

Um die durch den Einrastvorgang auftretenden Einpressdruck- bzw. -kraftschwankungen bei der Berechnung der Differenz weitgehend zu Unterdrücken, wird vor dem Berechnen der Differenz eine Tiefpassfilterung des Einpressdrucks oder der Einpresskraft am Ende der darauf folgenden Einpressphase durchgeführt.

In einer besonders bevorzugten Ausführungsform des erfindungsgemäßen Verfahrens weist die zur Verfügung gestellte Gasgeneratorkammer eine Einführöffnung zum Einführen des Gasgenerators auf, wobei der zweite Einpressbereich im Bereich der Einführöffnung und der erste Einpressbereich entfernt von der Einführöffnung angeordnet ist. Da das die Gasgeneratorkammer einschließende Gehäuse insbesondere im Bereich der Einführöffnung weniger stark belastbar ist, sind die erfindungsgemäßen Vorteile bei einer solchen Gasgeneratorkammer besonders ausgeprägt.

In einer besonders bevorzugten Ausführungsform des erfindungsgemäßen Verfahrens werden die Einpressbereiche von Stützrippen innerhalb der Gasgeneratorkammer gebildet.

In einer weiteren vorteilhaften Ausführungsform des erfindungsgemäßen Verfahrens wird die berechnete Differenz gespeichert, bevor die Verfahrensschritte wiederholt werden. Bei dieser Ausführungsform werden demzufolge mehrere Bauteile hintereinander gefertigt, wobei die berechneten Differenzen berechnet und gespeichert werden, wodurch eine Entwicklungstendenz der Differenzen erfasst werden kann.

Daher wird in einer besonders bevorzugten Ausführungsform des erfindungsgemäßen Verfahrens an Hand der gespeicherten Differenzen eine zukünftige Entwicklung der Differenz geschätzt. So kann der Prozess beispielsweise noch vor dem Herstellen eines funktionsuntüchtigen Bauteiles abgebrochen werden, wenn absehbar ist, dass die Differenz auf Grund der bisherigen Entwicklung innerhalb der nächsten Bauteilfertigungsdurchgänge ein funktionsuntüchtiges Bauteil erzeugen wird.

Das erfindungsgemäße Gehäuse, wie beispielsweise ein Airbaggehäuse oder ein Teil hiervon, kann vorteilhafterweise in dem erfindungsgemäßen Verfahren eingesetzt werden. Das Gehäuse weist eine Gasgeneratorkammer auf, in die ein Gasgenerator eingepresst werden kann. Die Gasgeneratorkammer umfasst mindestens einen ersten und einen zweiten Einpressbereich. Die Einpressbereiche können beispielsweise über einen Bereich voneinander getrennt sein, in dem kein Einpressen erfolgt, d.h. in dem keine Presspassung erzeugt wird, zumal hierdurch die Fertigung des Gehäuses bzw. der Gasgeneratorkammer wie auch das spätere Einpressen des Gasgenerators stark vereinfacht würde. Die Einpressbereiche sind derart angeordnet, dass ein Gasgenerator während des Einpressvorgangs zunächst nur in den ersten Einpressbereich und anschließend zusätzlich in den zweiten Einpressbereich der Gasgeneratorkammer eingepresst werden kann.

In einer bevorzugten Ausführungsform des erfindungsgemäßen Gehäuses weist die Gasgeneratorkammer eine Einführöffnung zum Einführen des Gasgenerators auf, wobei der zweite Einpressbereich im Bereich der Einführöffnung und der erste Einpressbereich entfernt von der Einführöffnung angeordnet ist.

In einer besonders bevorzugten Ausführungsform des erfindungsgemäßen Gehäuses sind die Einpressbereiche von Stützrippen innerhalb der Gasgeneratorkammer gebildet.

Die Erfindung wird im Folgenden an Hand von beispielhaften Ausführungsformen unter Bezugnahme auf die zugehörigen Zeichnungen näher erläutert. Es zeigen:
- Fig. 1: eine Seitenansicht eines gemäß dem erfindungsgemäßen Verfahren in eine Gasgeneratorkammer einzupressenden Gasgenerators in schematischer Darstellung,
- Fig. 2: eine Seitenansicht eines Airbaggehäuses mit einer Gasgeneratorkammer zur Aufnahme des Gasgenerators von Fig. 1 in geschnittener Darstellung,
- Fig. 3: eine Vorderansicht des Airbaggehäuses in Richtung des Pfeils A in Fig. 2,
- Fig. 4: ein Ablaufdiagramm zur Veranschaulichung des erfindungsgemäßen Verfahrens,
- Fig. 5: ein Diagramm zur Veranschaulichung des Einpressdruck- bzw. -kraftverlaufs beim Einpressen des Gasgenerators,
- Fig. 6: eine Seitenansicht des Gasgenerators und des Airbaggehäuses in einer ersten Phase des erfindungsgemäßen Verfahrens,
- Fig. 7: eine Seitenansicht des Gasgenerators und des Airbaggehäuses in einer zweiten Phase des erfindungsgemäßen Verfahrens und
- Fig. 8: eine Seitenansicht des Gasgenerators und des Airbaggehäuses in einer dritten Phase des erfindungsgemäßen Verfahrens.

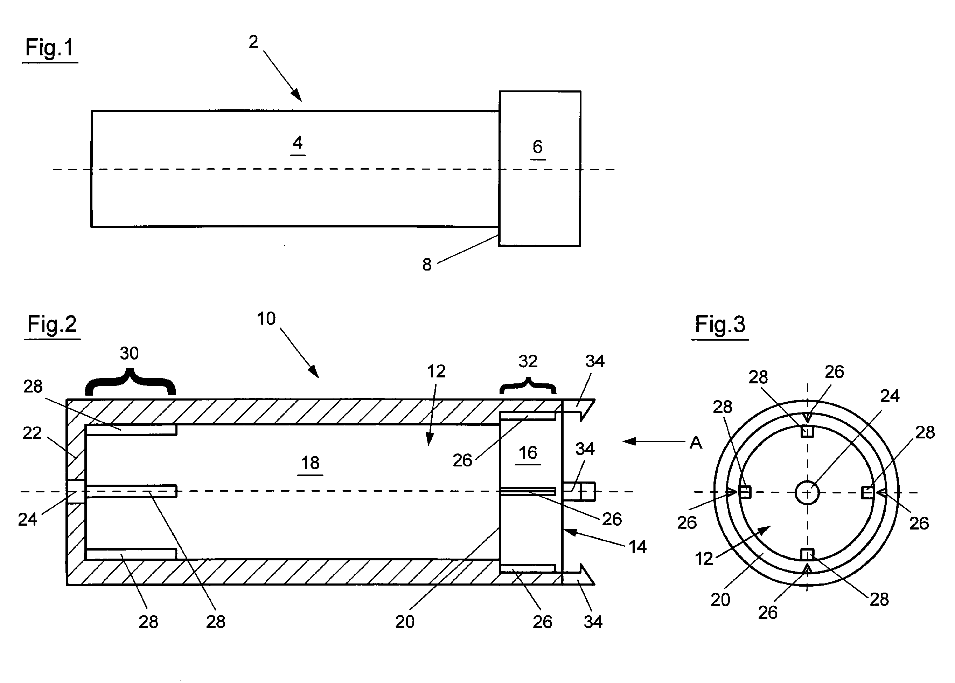

Fig. 1 zeigt eine schematische Darstellung eines Gasgenerators 2 zur Benutzung in einer Ausführungsform des erfindungsgemäßen Verfahrens. Der Gasgenerator 2 weist einen einführseitigen Abschnitt 4, der in die spätere Einführrichtung weist, und einen auf der anderen Seite angeordneten Gasgeneratorkopf 6 auf. Der Gasgenerator 2 ist im Wesentlichen zylindrisch ausgebildet, wobei der Gasgeneratorkopf 6 einen größeren Durchmesser als der einführseitige Abschnitt 4 hat, so dass ein umlaufender, in Einführrichtung weisender, vorspringender Ansatz 8 ausgebildet ist.

Fig. 2 zeigt ein Airbaggehäuse 10 zur Verwendung in dem erfindungsgemäßen Verfahren. Auf die Darstellung eines Luftsackes sowie der Kammer zur Aufnahme des gefalteten Luftsackes wurde in den Fig. 2 und 3 verzichtet, es ist vielmehr lediglich der Teil des Airbaggehäuses 10 dargestellt, in dem eine Gasgeneratorkammer 12 ausgebildet ist. Die Gasgeneratorkammer 12 ist im Wesentlichen zylindrisch ausgebildet und weist eine stirnseitige Einführöffnung 14 auf. An die Einführöffnung 14 schließt sich ein öffnungsseitiger Abschnitt 16 an. Auf den öffnungsseitigen Abschnitt 16 folgt ein der Einführöffnung 14 abgewandter Abschnitt 18, wobei der Durchmesser des öffnungsseitigen Abschnittes 16 größer als der Durchmesser des der Einführöffnung 14 abgewandten Abschnittes 18 ist, so dass zwischen den beiden Abschnitten ein umlaufender, vorspringender Ansatz 20 ausgebildet ist. Die dem Abschnitt 16 abgewandte Stirnseite des Abschnittes 18 ist durch eine Wand 22 verschlossen, jedoch ist in der Wand 22 eine Bohrung 24 vorgesehen, durch die eine Schraube (nicht dargestellt) zum zusätzlichen Fixieren des einführseitigen Abschnittes 4 des Gasgenerators 2 eingeführt werden kann. Auf eine Schraube und somit auch auf die Bohrung 24 könnte jedoch verzichtet werden, wenn die Presspassung und das Verrasten einen ausreichende Fixierung ermöglicht.

In dem öffnungsseitigen Abschnitt 16 sind mehrere Stützrippen 26 angeordnet, die sich in Längsrichtung der Gasgeneratorkammer 12 und somit in die Einführrichtung erstrecken. Die Stützrippen 26 dienen dem seitlichen Abstützen und Verklemmen des einzuführenden Gasgenerators 2. In dem der Einführöffnung 14 abgewandten Abschnitt 18 sind ferner weitere Stützrippen 28 vorgesehen, die ebenfalls in Längsrichtung der Gasgeneratorkammer 12 verlaufen.

Die Stützrippen 28 dienen unter anderem der zentralen Positionierung des einzuführenden Gasgenerators 2 und erstrecken sich über einen Bereich, der als erster Einpressbereich 30 bezeichnet wird. Dies bedeutet, dass es in diesem ersten Einpressbereich 30 durch das spätere Einführen des Gasgenerators 2 zu einer Presspassung zwischen dem Gasgenerator 2 einerseits und den Stützrippen 28 andererseits kommt. In Analogie hierzu erstrecken sich die Stützrippen 26 in dem öffnungsseitigen Abschnitt 16 über einen Bereich, der als zweiter Einpressbereich 32 bezeichnet wird. Der zweite Einpressbereich 32 befindet sich somit im Bereich der Einführöffnung 14, während der erste Einpressabschnitt 30 weiter entfernt von der Einführöffnung 14 angeordnet ist.

An dem Airbaggehäuse 10 sind ferner Rastmittel in Form von Rasthaken 34 vorgesehen, die um die Einführöffnung 14 angeordnet sind und mit dem Gasgenerator 4 verrasten, wenn dieser bis in seine Einbaulage eingeführt wurde. Auf die Darstellung der Rasthaken wurde in Fig. 3 aus Gründen der Übersichtlichkeit verzichtet.

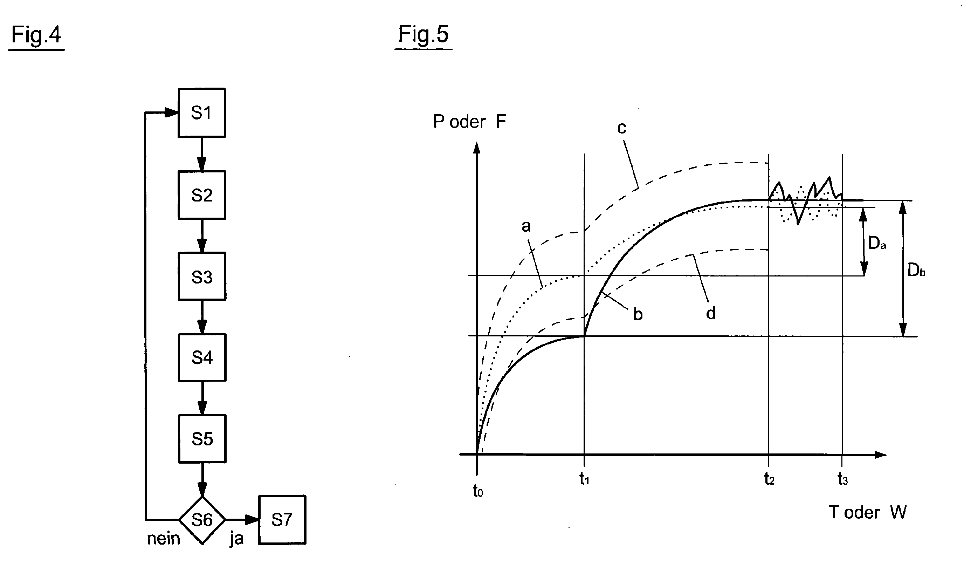

Fig. 4 zeigt ein Ablaufdiagramm des erfindungsgemäßen Verfahrens, bei dem der Gasgenerator 2 von Fig. 1 in die Gasgeneratorkammer 12 von Fig. 2 bzw. 3 eingepresst wird. Fig. 5 zeigt den Verlauf des Einpressdrucks P in Abhängigkeit von der verstrichenen Zeit T. An Stelle der Zeit T könnte auf der X-Achse jedoch auch der von dem Gasgenerator 2 während des Einpressens zurückgelegte Weg W aufgetragen sein, und an Stelle des Einpressdruckes P könnte auch die Einpresskraft F verwendet werden. Die gestrichelte Linie a zeigt dabei den Einpresskraftverlauf bei einem funktionstüchtigen Bauteil, während die durchgezogene Linie b den Einpresskraftverlauf bei einem funktionsuntüchtigen Bauteil zeigt, bei dem die Fügespannungen innerhalb des Airbaggehäuses 10 derart hoch sind, dass später mit einem Versagen des Bauteiles gerechnet werden muss.

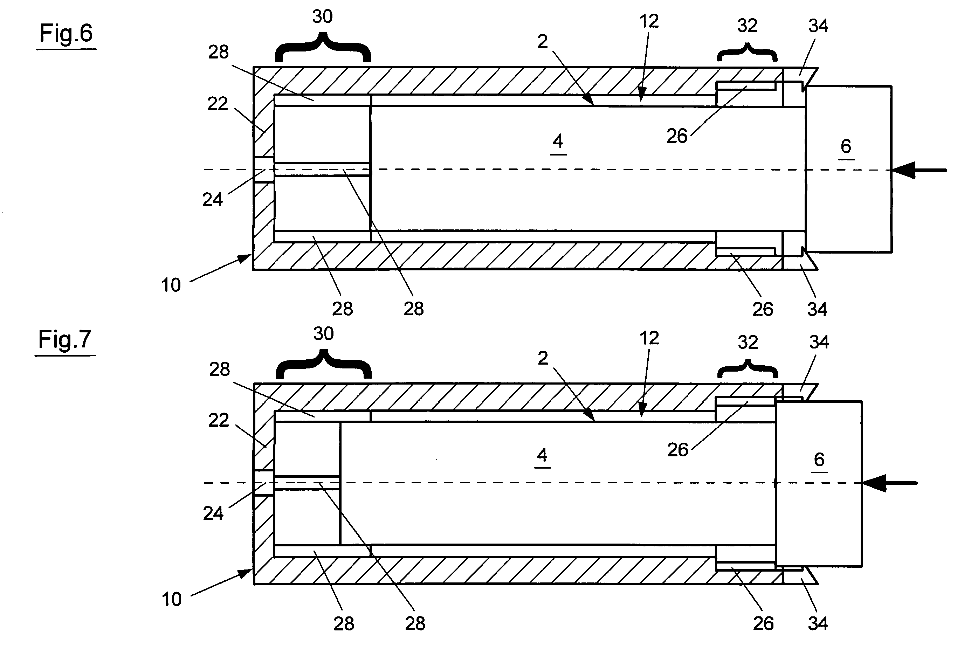

In einem ersten Verfahrensschritt S1 (Fig. 4) wird der Gasgenerator 2 und die Gasgeneratorkammer 12, die innerhalb des Airbaggehäuses 10 ausgebildet ist, bereitgestellt. Anschließend wird der einführseitige Abschnitt 4 des Gasgenerators 2 in einem Verfahrensschritt S2 durch die Einführöffnung 14 an dem Airbaggehäuse 10 in die Gasgeneratorkammer 12 eingeführt. Durch das Einführen wird der einführseitige Abschnitt 4 an den ersten Einpressbereich 30 der Gasgeneratorkammer 12 herangeführt. Dieser Zustand zum Zeitpunkt t₀ ist in Fig. 6 gezeigt. Wird der Gasgenerator 2 nunmehr weiter in die Gasgeneratorkammer 12 eingeführt, so beginnt das Einpressen in dem Verfahrensschritt S3. Der Gasgenerator 2 wird zwischen den Zeitpunkten t₀ und t₁ zunächst lediglich in dem ersten Einpressbereich 30 eingepresst, so dass die Stützrippen 28 einen Druck auf den Gasgenerator 2 ausüben und umgekehrt. Dies führt zwischen den Zeitpunkten t₀ und t₁ zu einem Anstieg des Einpressdrucks P.

Zum Zeitpunkt t₁ ist der Gasgenerator 2 dann derart weit in den ersten Einpressbereich 30 eingepresst, dass das einführseitige Ende des Gasgeneratorkopfes 6 mittlerweile an den Anfang des zweiten Einpressbereiches 32 herangeführt ist. Dieser Zustand zum Zeitpunkt t₁ ist in Fig. 7 gezeigt. Wird der Gasgenerator 2 nunmehr weiter in die Gasgeneratorkammer 12 eingeführt, so wird der Gasgenerator 2 zusätzlich in den zweiten Einpressbereich 32 eingepresst, so dass auch die Stützrippen 26 einen Druck auf den Gasgenerator 2 ausüben und umgekehrt. Dies führt zwischen den Zeitpunkten t₁ und t₂ zu einem weiteren Anstieg des Einpressdrucks P, wie dies in Fig. 5 dargestellt ist.

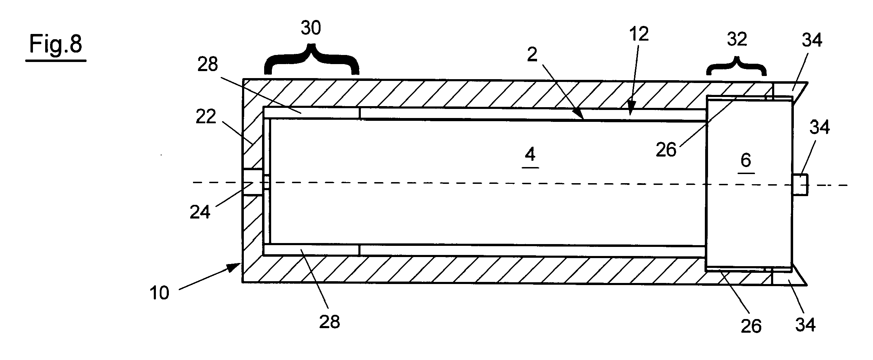

Ist der Gasgenerator 2 vollständig in die Gasgeneratorkammer 12 eingepresst, so hintergreifen die Rasthaken 34 den Gasgeneratorkopf 6, wie dies in Fig. 8 gezeigt ist. Der umlaufende Ansatz 20 kann ferner als Anschlag für den umlaufenden Ansatz 8 an dem Gasgeneratorkopf 6 dienen. Bei dem Einrastvorgang kommt es zu Schwankungen des Einpressdrucks P, wie dies zwischen den Zeitpunkten t₂ und t₃ in Fig. 5 angedeutet ist. Um diese Schwankungen bei einer späteren Berechnung unberücksichtigt lassen zu können, wird eine Tiefpassfilterung durchgeführt.

Während des Verfahrensschrittes S3 wurde der Einpressdruck P erfasst, wie dies in Fig. 5 an Hand der Verläufe a und b gezeigt ist. Nun wird in einem weiteren Verfahrensschritt S4 die Differenz zwischen dem Einpressdruck P zum Zeitpunkt t₁, also am Ende der ersten Einpressphase t₀ bis t₁, und dem Einpressdruck P zum Zeitpunkt t₂, also am Ende einer auf die erste Einpressphase folgenden Einpressphase t₁ bis t₂, berechnet. Die erste Einpressphase endet demzufolge unmittelbar vor dem zusätzlichen Einpressen des Gasgenerators 2 in den zweiten Einpressbereich 32, und die darauf folgende Einpressphase endet nach dem vollständigen Einpressen des Gasgenerators 2 in den zweiten Einpressbereich 32. Die Differenzen Dₐ und D_{b} für die entsprechenden Einpressdruckverläufe a und b sind in Fig. 5 angedeutet. Die berechneten Differenzen Dₐ und D_{b} werden gespeichert, um an Hand der gespeicherten Werte eine zukünftige Entwicklung abschätzen zu können.

In einem anschließenden Verfahrensschritt S5 wird ein Vergleich durchgeführt, bei dem die berechnete Differenz Dₐ bzw. D_{b} mit einem vorbestimmten Grenzwert D_{grenz} verglichen wird. Anschließend wird in S6 die Abfrage durchgeführt, ob die berechnete Differenz Dₐ bzw. D_{b} den vorbestimmten Grenzwert D_{grenz} überschreitet. Sollte dies nicht der Fall sein, wie beispielsweise bei der Differenz Dₐ, so kann des Verfahren mit dem Verfahrensschritt S1 erneut aufgenommen werden, um eine weitere Baugruppe herzustellen. Ist der vorbestimmte Grenzwert D_{grenz} jedoch überschritten, wie im Falle der Differenz D_{b}, so wird das Verfahren im Verfahrensschritt S7 unterbrochen und ein entsprechendes Warnsignal wird ausgegeben.

Als Alternative zu der Überwachung der berechneten Differenzen Dₐ, D_{b} oder vorzugsweise ergänzend hierzu kann eine Überwachung mit Hilfe von Grenzwertkurven durchgeführt werden. Zu diesem Zweck wird - wie dies in Fig. 5 angedeutet ist - eine obere Grenzwertkurve c und eine untere Grenzwertkurve d für die erste und die darauf folgende Einpressphase festgelegt. Nun wird der Einpressdruckverlauf a bzw. b wie gehabt erfasst und stets mit der oberen und unteren Grenzwertkurve c bzw. d verglichen. Wenn der Einpressdruckverlauf die untere Grenzwertkurve d unterschreitet oder die obere Grenzwertkurve c überschreitet, so wird das Verfahren auch dann unterbrochen. Im Falle des Einpressdruckverlaufes b wäre dies demzufolge schon innerhalb der ersten Einpressphase t₀ bis t₁ der Fall, zumal hier auf Grund von Vorversuchen o. ä. absehbar ist, dass ein funktionsuntüchtiges Bauteil erzeugt wird.

### Bezugszeichenliste

- 2: Gasgenerator
- 4: einführseitiger Abschnitt (Gasgenerator)
- 6: Gasgeneratorkopf
- 8: umlaufender Ansatz (Gasgenerator)
- 10: Airbaggehäuse
- 12: Gasgeneratorkammer
- 14: Einführöffnung
- 16: öffnungsseitiger Abschnitt
- 18: der Einführöffnung abgewandter Abschnitt
- 20: umlaufender Ansatz (Airbaggehäuse)
- 22: stirnseitige Wand
- 24: Bohrung
- 26, 28: Stützrippen
- 30: erster Einpressbereich
- 32: zweiter Einpressbereich
- 34: Rasthaken

- a, b: Einpressdruckverläufe
- c: obere Grenzwertkurve
- d: untere Grenzwertkurve
- Dₐ, D_{b}: berechnete Differenzen
- D_{grenz}: vorbestimmter Grenzwert
- F: Einpresskraft
- P: Einpressdruck
- S1 - S7: Verfahrensschritte
- t₁ - t₃: Zeitpunkte
- T: Zeit
- W: Weg

## Patentansprüche

1. Verfahren zum Befestigen eines Gasgenerators in einer Gasgeneratorkammer mit den Verfahrensschritten
Bereitstellen eines Gasgenerators und einer Gasgeneratorkammer, wobei der Gasgenerator in die Gasgeneratorkammer einpressbar ist,
Einpressen des Gasgenerators in die Gasgeneratorkammer,
Erfassen des Einpressdrucks oder der Einpresskraft während einer ersten Einpressphase und einer darauf folgenden Einpressphase und
Unterbrechen des Verfahrens, wenn ein vorbestimmter Grenzwert überschritten wird.

2. Verfahren nach Anspruch 1 mit den weiteren Verfahrensschritten
Festlegen einer oberen Grenzwertkurve und einer unteren Grenzwertkurve für die erste und die darauf folgende Einpressphase und
Erfassen des Einpressdruck- oder -kraftverlaufes,
wobei das Verfahren unterbrochen wird, wenn der Einpressdruck- oder -kraftverlauf die untere Grenzwertkurve unterschreitet oder die obere Grenzwertkurve überschreitet.

3. Verfahren nach Anspruch 1 oder 2 mit den weiteren Verfahrensschritten
Berechnen der Differenz zwischen dem Einpressdruck oder der Einpresskraft am Ende einer ersten Einpressphase und dem Einpressdruck oder der Einpresskraft am Ende einer darauf folgenden Einpressphase und
Unterbrechen des Verfahrens, wenn die Differenz einen vorbestimmten Grenzwert überschreitet.

4. Verfahren nach einem der vorangehenden Ansprüche, wobei beim Unterbrechen des Verfahrens ferner ein Warnsignal ausgegeben wird.

5. Verfahren nach einem der vorangehenden Ansprüche, bei dem die bereitgestellte Gasgeneratorkammer mindestens einen ersten und einen zweiten Einpressbereich aufweist, wobei der Gasgenerator im Verlaufe des Einpressens zunächst nur in den ersten Einpressbereich und anschließend zusätzlich in den zweiten Einpressbereich der Gasgeneratorkammer eingepresst wird.

6. Verfahren nach Anspruch 5, bei dem die erste Einpressphase unmittelbar vor dem zusätzlichen Einpressen des Gasgenerators in den zweiten Einpressbereich endet.

7. Verfahren nach Anspruch 5 oder 6, bei dem die darauf folgende Einpressphase nach dem Einpressen des Gasgenerators in den zweiten Einpressbereich endet.

8. Verfahren nach einem der Ansprüche 5 bis 7, bei dem der bereitgestellte Gasgenerator mit einem Gehäuse verrastbar ist, in dem die Gasgeneratorkammer ausgebildet ist, nachdem die darauf folgende Einpressphase beendet ist.

9. Verfahren nach Anspruch 8, bei dem vor dem Berechnen der Differenz eine Tiefpassfilterung des Einpressdrucks oder der Einpresskraft am Ende der darauf folgenden Einpressphase durchgeführt wird.

10. Verfahren nach einem der Ansprüche 5 bis 9, bei dem die bereitgestellte Gasgeneratorkammer eine Einführöffnung zum Einführen des Gasgenerators aufweist, wobei der zweite Einpressbereich im Bereich der Einführöffnung und der erste Einpressbereich entfernt von der Einführöffnung angeordnet ist.

11. Verfahren nach einem der Ansprüche 5 bis 10, bei dem die Einpressbereiche von Stützrippen innerhalb der Gasgeneratorkammer gebildet werden.

12. Verfahren nach einem der vorangehenden Ansprüche, bei dem die berechnete Differenz gespeichert wird, bevor die Verfahrensschritte wiederholt werden.

13. Verfahren nach Anspruch 12, bei dem an Hand der gespeicherten Differenzen eine zukünftige Entwicklung der Differenz geschätzt wird.

14. Gehäuse (10) mit einer Gasgeneratorkammer (12), in die ein Gasgenerator einpressbar ist, mit mindestens einem ersten und einem zweiten Einpressbereich (30, 32), wobei der Gasgenerator im Verlaufe des Einpressens zunächst nur in den ersten Einpressbereich (30) und anschließend zusätzlich in den zweiten Einpressbereich (32) der Gasgeneratorkammer (12) einpressbar ist.

15. Gehäuse (10) mit einer Gasgeneratorkammer (12) nach Anspruch 14, bei dem die Gasgeneratorkammer (12) eine Einführöffnung (14) zum Einführen des Gasgenerators aufweist, wobei der zweite Einpressbereich (32) im Bereich der Einführöffnung (14) und der erste Einpressbereich (30) entfernt von der Einführöffnung (14) angeordnet ist.

16. Gehäuse (10) mit einer Gasgeneratorkammer (12) nach Anspruch 14 oder 15, bei dem die Einpressbereiche (30, 32) von Stützrippen (26, 28) innerhalb der Gasgeneratorkammer (12) gebildet sind.
